# EUROPEAN PATENT APPLICATION

(11) **EP 4 228 171 A1**
(43) Date of publication of application: **16.08.2023**
(21) Application number: 23156475.8
(22) Date of filing: 14.02.2023
(51) Int. Cl.: H04B 7/185, H04M 1/253, H04M 7/00

(54) **ENHANCEMENT OF PACKET BASED VOICE CALL SERVICE OVER SATELLITE LINK**

(30) Priority: 14.02.2022 FI 20225127
(71) Applicant: Nokia Solutions and Networks Oy, 02610 Espoo (FI)
(72) Inventor: TAYLOE, Daniel, Phoenix (US); BRAUSCH, James, Scottsdale (US); LI, Weidong, Aurora (US); MCHARG, Christopher, Winfield (US)
(74) Representative: Nokia EPO representatives

(57) **Abstract**

There are provided measures for enhancement of packet based voice call service over satellite link. Such measures exemplarily comprise receiving, from a communication endpoint, a message indicative of at least one voice data packet to be uploaded via a satellite link, determining a first number of voice data packets based on a second number of voice data packets predicted to accumulate until receipt of a first grant message at said communication endpoint, and transmitting, towards said communication endpoint, said first grant message, said first grant message being indicative of an upload scheduling grant for said first number of voice data packets.

## Description

### Field

Various example embodiments relate to enhancement of packet based voice call service over satellite link. More specifically, various example embodiments exemplarily relate to measures (including methods, apparatuses and computer program products) for realizing enhancement of packet based voice call service over satellite link.

### Background

The present specification generally relates to provision of cellular service to existing Long Term Evolution (LTE) and 5^{th} Generation (5G) subscribers using a low earth orbit satellite system.

In a terrestrial LTE cellular system, the normal Ack/Nack (Acknowledgment/Non-Acknowledgement) feedback time for physical uplink shared channel (PUSCH) or physical downlink shared channel (PDSCH) assignments is 8 msec. The use of a low earth orbit satellite system is introducing additional 40 msec, which makes the round trip Ack/Nack feedback time to become 48 msec, i.e., much longer than normally seen in a terrestrial network.

In the downlink (DL) direction, the evolved NodeB (eNodeB, eNB) equipment knows there is a voice over LTE (VoLTE) packet to send to the user equipment (UE) when a VoLTE packet shows up in the downlink buffer. Thus, the nominal time to delivery that VoLTE packet to the UE and to getting an Ack/Nack response is 8 msec. Additional time may be required if the UE is currently in sleep mode. For VoLTE, a discontinuous reception (DRX) sleep mode on/off cycle typically allows an "on" period every 40 msec.

While, thus, in the DL direction, VoLTE packets can be sent based on internal buffer knowledge (i.e., based on that a downlink VoLTE packet needs to be sent), this is not the case in the uplink (UL) direction.

Namely, the eNB has no knowledge of the presence of VoLTE packets at the UE until the UE tells the eNB that the packet exists. The UE can tell the eNB via either a scheduling request (SR) signal towards the eNB or via a buffer status report (BSR) in case of sending other non-voice data to the eNB when the VoLTE packet arrives. Once an SR is received (the typical mechanism used by the UE) at the eNB (8 msec), the eNB can issue an UL grant and receive the data in another 8 msec, for a total of 16 msec, which is less than the time for the next VoLTE packet to arrive.

A satellite system (i.e., low earth orbit satellite system mentioned above) tries to interwork with commercial mobile devices using the existing LTE standard. In order to get maximum UL or DL throughput, the system needs to be able to work within the existing standards despite the additional 40 msec caused by the round-trip time through a satellite. This 40 msec of satellite delay causes the Ack/Nack hybrid automatic repeat request (HARQ) responses to be received 48 msec later.

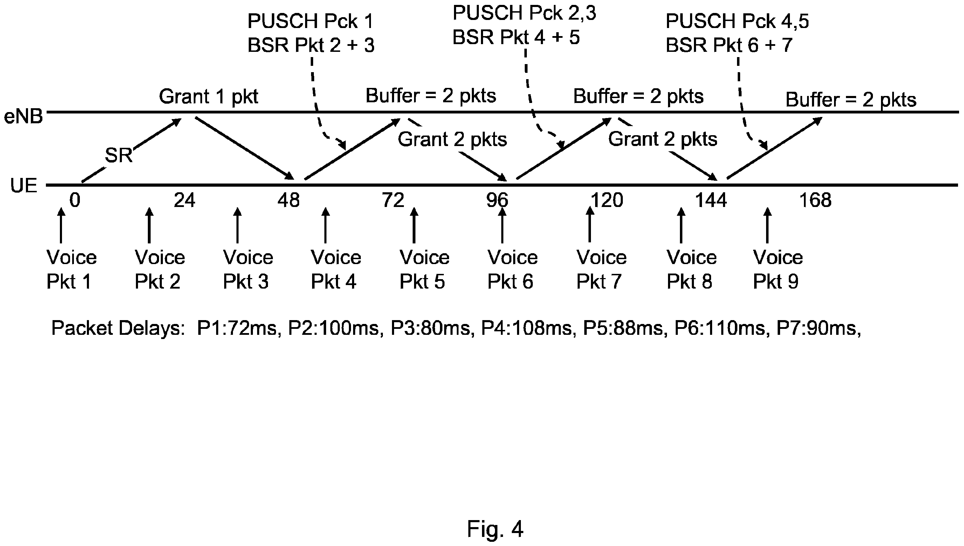

Figure 4 shows a schematic diagram of signaling sequences, and in particular illustrates a sequence of a user equipment frequently indicating accumulated voice packets and the eNB scheduling UL transmission thereof in the satellite system scenario.

As can be seen in Figure 4, with VoLTE packets arriving/accumulating every 20 msec, assuming best case conditions such as
- good radio frequency (RF) (i.e., conditions good enough that two VoLTE packets (about 600 bits) can be sent in one uplink transmission),
- no HARQ retransmissions needed,
- frequency division duplex (FDD), and
- no uplink queuing delay
the nominal delay of a voice packet is roughly 90 to 110 msec.

For a best case condition, this is a rather long delay.

In addition, the normal VoLTE operating mode is to use 40 msec DRX, which causes the UE to wake up every 40 msec and to send two VoLTE packets at a time. This mode would add additional 20 msec of latency, causing the nominal delay of a voice packet in the best case to extend to 110 to 130 msec.

Contrary thereto, in the terrestrial case above, the delay between the UE sending the SR (about 4 msec) and the eNB granting and receiving the corresponding VoLTE packet (8 msec) amounts to 4 msec + 8 msec, i.e., 12 msec, assuming best case conditions.

In the same way as explained above for the satellite case, 40 msec DRX would add additional 20 msec of latency, causing the nominal delay of a voice packet in the best case to extend to 32 msec.

Hence, the problem arises that, compared to the terrestrial case, in the satellite case, a high delay of UL voice packets is experienced even assuming best case conditions.

Hence, there is a need to provide for enhancement of packet based voice call service over satellite link.

### Summary

Various example embodiments aim at addressing at least part of the above issues and/or problems and drawbacks.

Various aspects of example embodiments are set out in the appended claims.

According to an exemplary aspect, there is provided a method comprising receiving, from a communication endpoint, a message indicative of at least one voice data packet to be uploaded via a satellite link, determining a first number of voice data packets based on a second number of voice data packets predicted to accumulate until receipt of a first grant message at said communication endpoint, and transmitting, towards said communication endpoint, said first grant message, said first grant message being indicative of an upload scheduling grant for said first number of voice data packets.

According to an exemplary aspect, there is provided an apparatus comprising receiving circuitry configured to receive, from a communication endpoint, a message indicative of at least one voice data packet to be uploaded via a satellite link, determining circuitry configured to determine a first number of voice data packets based on a second number of voice data packets predicted to accumulate until receipt of a first grant message at said communication endpoint, and transmitting circuitry configured to transmit, towards said communication endpoint, said first grant message, said first grant message being indicative of an upload scheduling grant for said first number of voice data packets.

According to an exemplary aspect, there is provided an apparatus comprising at least one processor, at least one memory including computer program code, and at least one interface configured for communication with at least another apparatus, the at least one processor, with the at least one memory and the computer program code, being configured to cause the apparatus to perform receiving, from a communication endpoint, a message indicative of at least one voice data packet to be uploaded via a satellite link, determining a first number of voice data packets based on a second number of voice data packets predicted to accumulate until receipt of a first grant message at said communication endpoint, and transmitting, towards said communication endpoint, said first grant message, said first grant message being indicative of an upload scheduling grant for said first number of voice data packets.

According to an exemplary aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an efficient reduction of a delay of UL voice packets experienced in the satellite case, to thereby solve at least part of the problems and drawbacks identified in relation to the prior art.

By way of example embodiments, there is provided enhancement of packet based voice call service over satellite link. More specifically, by way of example embodiments, there are provided measures and mechanisms for realizing enhancement of packet based voice call service over satellite link.

Thus, improvement is achieved by methods, apparatuses and computer program products enabling/realizing enhancement of packet based voice call service over satellite link.

### Brief description of the drawings

In the following, the present disclosure will be described in greater detail by way of non-limiting examples with reference to the accompanying drawings, in which
Figure 1 is a block diagram illustrating an apparatus according to example embodiments,
Figure 2 is a block diagram illustrating an apparatus according to example embodiments,
Figure 3 is a schematic diagram of a procedure according to example embodiments,
Figure 4 shows a schematic diagram of signaling sequences,
Figure 5 shows a schematic diagram of signaling sequences according to example embodiments,
Figure 6 shows a schematic diagram of signaling sequences according to example embodiments,
Figure 7 shows a schematic diagram of signaling sequences according to example embodiments,
Figure 8 shows a schematic diagram of signaling sequences according to example embodiments,
Figure 9 shows a schematic diagram of signaling sequences according to example embodiments,
Figure 10 shows a schematic diagram of signaling sequences according to example embodiments,
Figure 11 shows a schematic diagram of signaling sequences according to example embodiments,
Figure 12 shows a schematic diagram of signaling sequences according to example embodiments,
Figure 13 shows a schematic diagram of signaling sequences according to example embodiments, and
Figure 14 is a block diagram alternatively illustrating apparatuses according to example embodiments.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

In particular, while example embodiments are mainly described with reference to LTE VoLTE, as the air interface frame structure for LTE VoLTE is very similar to that of e.g. 5G voice over New Radio (VoNR) example embodiments are applicable to other technology such as VoNR as well. In other words, while example embodiments show application to an LTE based satellite system, the principles disclosed herein are also applicable (and according to example embodiments applied) to an 5G based satellite system and similar satellite systems.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to example embodiments, in general terms, there are provided measures and mechanisms for (enabling/realizing) enhancement of packet based voice call service over satellite link.

For a terrestrial network, delay is not a major factor as outlined above. For VoLTE, proactive grants can be applied to eliminate the need for the SR (4 msec), but the extra 20 msec due to the use of 40 msec DRX still place the delay (best case - FDD, good RF, no queuing and no additional HARQ delay) at about 28 msec. However, considering the goal that packet delay should be less than 100ms (under less than best case conditions) to achieve high voice quality, in view of the above outlined round trip Ack/Nack feedback time heavily extended by design for low earth orbit satellite systems, such approach alone would not suffice.

Hence, in brief, according to example embodiments, at the start of a talk burst (such as at the reception of an SR), a size of three VoLTE packets are artificially added to the eNB's uplink queue in order to get caught up with the outstanding VoLTE packets given the high delay in the satellite link.

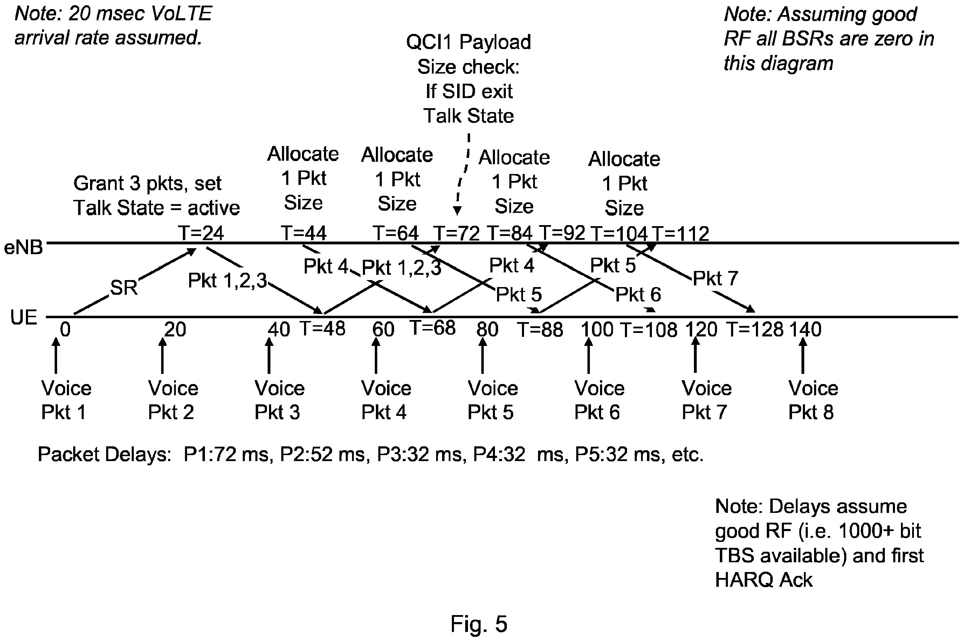

Figure 5 shows a schematic diagram of signaling sequences according to example embodiments, and in particular illustrates an anticipating grant of a higher number of packets than requested in response to reception of the SR.

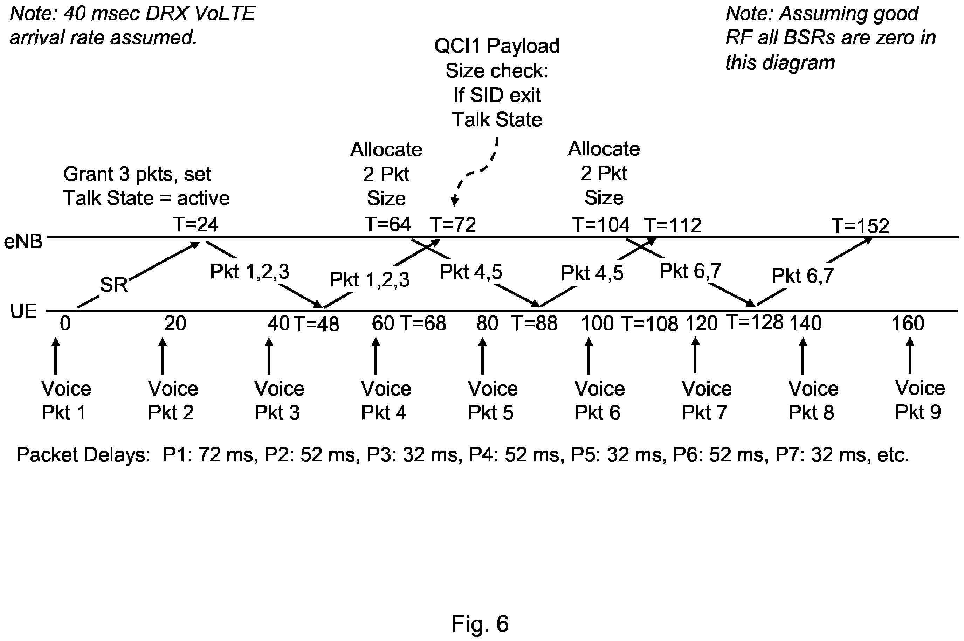

Figure 6 shows a schematic diagram of signaling sequences according to example embodiments, and in particular as well illustrates an anticipating grant of a higher number of packets than requested in response to reception of the SR.

As a consequence, the overall delay can be reduced.

The initial larger size three-fold (3x) grant is not needed in a terrestrial network due to the overall low delay but is needed in the satellite case to get caught up with the number of VoLTE packets predicted to be outstanding when the SR driven grant arrives at the UE.

Further, according to example embodiments, periodic one-packet-sized proactive grants every 20 msec or two-packet-sized proactive grants every 40 msec (depending on the use of 40 msec DRX or not) are provided, which are timed to arrive at the UE shortly after the voice traffic is available.

The case of the periodic one-packet-sized proactive grants every 20 msec is illustrated in Figure 5, while the case of the periodic two-packet-sized proactive grants every 40 msec is illustrated in Figure 6.

As a consequence, the overall delay can be further reduced.

In the timing diagrams illustrated in Figures 5 and 6, the proactive grant is respectively sent shortly before an UL response is received.

Further, according to example embodiments, a concept of a state machine (reflecting a "Talk State" being active or off/inactive) is provided in order to reduce unnecessary bandwidth needed when a talk spurt ends and there is no longer periodic (20 msec) UL voice traffic.

Heretofore, according to example embodiments, means and measures for detection of entry into the state "Talk State = active" and exit of that state are provided.

When there is no uplink voice traffic, the UE periodically sends "comfort noise" data, i.e., silence descriptor (SID), nominally every 160 msec.

Thus, as an option, according to example embodiments, means and measures for detection of entry into the state "Talk State = active" and exit of that state detect SIDs (e.g. based on a payload size threshold). According to example embodiments, the SIDs may be ignored in order to minimize proactive grants.

As a further option, according to example embodiments, means and measures for detection of entry into the state "Talk State = active" and exit of that state assume that, once a SID is detected, there is a high likelihood that another SID will be seen 160 msec later.

On the other hand, according to example embodiments, for decision on proactive grants, it is assumed that once a VoLTE voice packet is seen, more VoLTE voice packets will immediately follow.

The 40 msec delay referred to herein is the specific round trip delay being compensated for in this low earth orbit satellite system. The actual delay could be higher or lower than this. However the general approach of sending x packets of initial grants (e.g. three-fold grant) to get caught up with the delay introduced and of timing periodic grants to arrive at the UE shortly after the voice packets are available for sending at the UE as outlined above applies to a wide range of actual satellite delay.

Example embodiments are specified below in more detail.

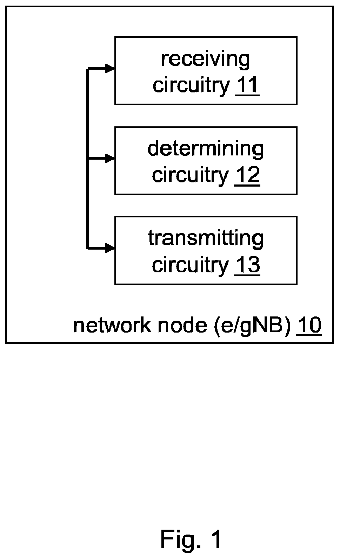

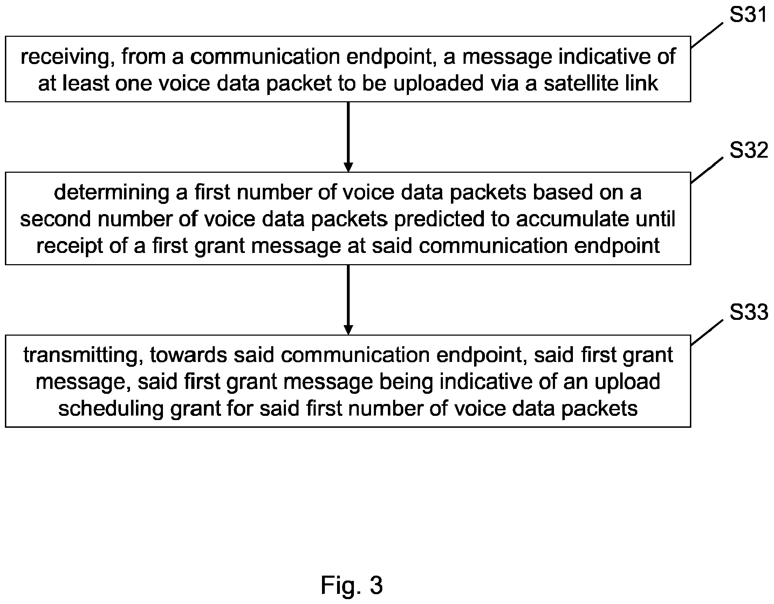

Figure 1 is a block diagram illustrating an apparatus according to example embodiments. The apparatus may be a network node or entity or an access node or entity 10 such as a base station (e.g. an eNB or gNB) comprising a receiving circuitry 11, a determining circuitry 12, and a transmitting circuitry 13. The receiving circuitry 11 receives, from a communication endpoint, a message indicative of at least one voice data packet to be uploaded via a satellite link. The determining circuitry 12 determines a first number of voice data packets based on a second number of voice data packets predicted to accumulate until receipt of a first grant message at said communication endpoint. The transmitting circuitry 13 transmits, towards said communication endpoint, said first grant message, said first grant message being indicative of an upload scheduling grant for said first number of voice data packets. Figure 3 is a schematic diagram of a procedure according to example embodiments. The apparatus according to Figure 1 may perform the method of Figure 3 but is not limited to this method. The method of Figure 3 may be performed by the apparatus of Figure 1 but is not limited to being performed by this apparatus.

As shown in Figure 3, a procedure according to example embodiments comprises an operation of receiving (S31), from a communication endpoint, a message indicative of at least one voice data packet to be uploaded via a satellite link, an operation of determining (S32) a first number of voice data packets based on a second number of voice data packets predicted to accumulate until receipt of a first grant message at said communication endpoint, and an operation of transmitting (S33), towards said communication endpoint, said first grant message, said first grant message being indicative of an upload scheduling grant for said first number of voice data packets.

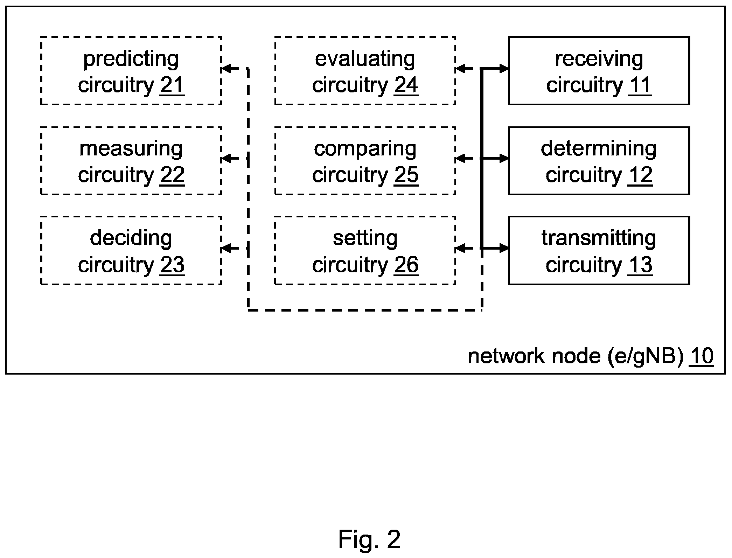

Figure 2 is a block diagram illustrating an apparatus according to example embodiments. In particular, Figure 2 illustrates a variation of the apparatus shown in Figure 1. The apparatus according to Figure 2 may thus further comprise a predicting circuitry 21, a measuring circuitry 22, a deciding circuitry 23, an evaluating circuitry 24, a comparing circuitry 25, and/or a setting circuitry 26.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to a variation of the procedure shown in Figure 3, exemplary additional operations are given, which are inherently independent from each other as such. According to such variation, an exemplary method according to example embodiments may comprise an operation of predicting said second number of voice data packets.

According to further example embodiments, said first number of voice data packets is equal to said second number of voice data packets.

According to further example embodiments, said first number of voice data packets is determined based on a prediction accuracy of silence descriptor packets.

According to further example embodiments, said first number of voice data packets is determined based on a weighing of voice delay and resource wasting.

According to further example embodiments, said first number of voice data packets is determined based on whether said at least one voice data packet indicated with said message as to be uploaded via said satellite link is expected to be a silence descriptor packet.

According to further example embodiments, said first number of voice data packets is determined smaller in case said at least one voice data packet indicated with said message as to be uploaded via said satellite link is expected to be said silence descriptor packet than in case said at least one voice data packet indicated with said message as to be uploaded via said satellite link is not expected to be said silence descriptor packet.

According to a variation of the procedure shown in Figure 3, exemplary additional operations are given, which are inherently independent from each other as such. According to such variation, an exemplary method according to example embodiments may comprise an operation of determining a third number of voice data packets based on a fourth number of voice data packets predicted to accumulate between receipt of a grant message preceding a second grant message at said communication endpoint and receipt of said second grant message at said communication endpoint, and an operation of transmitting, towards said communication endpoint, said second grant message, said second grant message being indicative of an upload scheduling grant for said third number of voice data packets.

According to a variation of the procedure shown in Figure 3, exemplary additional operations are given, which are inherently independent from each other as such. According to such variation, an exemplary method according to example embodiments may comprise an operation of predicting said fourth number of voice data packets.

According to further example embodiments, said third number of voice data packets is equal to said fourth number of voice data packets.

According to further example embodiments, said third number of voice data packets is determined based on a prediction accuracy of silence descriptor packets.

According to further example embodiments, said third number of voice data packets is determined based on a weighing of voice delay and resource wasting.

According to further example embodiments, said third number of voice data packets is determined based on whether said at least one voice data packet indicated with said message as to be uploaded via said satellite link is expected to be a silence descriptor packet.

According to further example embodiments, said third number of voice data packets is determined smaller in case said at least one voice data packet indicated with said message as to be uploaded via said satellite link is expected to be said silence descriptor packet than in case said at least one voice data packet indicated with said message as to be uploaded via said satellite link is not expected to be said silence descriptor packet.

According to a variation of the procedure shown in Figure 3, exemplary additional operations are given, which are inherently independent from each other as such. According to such variation, an exemplary method according to example embodiments may comprise an operation of measuring a first timing of said receiving said message, and an operation of determining a second timing of said transmitting said second grant message based on said first timing.

According to a variation of the procedure shown in Figure 3, exemplary additional operations are given, which are inherently independent from each other as such. According to such variation, an exemplary method according to example embodiments may comprise an operation of determining a period between transmitting said grant message preceding said second grant message and said transmitting said second grant message. Here, said second timing is determined based on said period.

According to further example embodiments, said period is determined based on a discontinuous reception configuration of said communication endpoint.

According to further example embodiments, said period is determined such that a time interval between accumulating a last of said fourth number of voice data packets predicted to accumulate between receipt of said grant message preceding said second grant message at said communication endpoint and receipt of said second grant message at said communication endpoint and receipt of said second grant message at said communication endpoint is minimized.

According to a variation of the procedure shown in Figure 3, exemplary additional operations are given, which are inherently independent from each other as such. According to such variation, an exemplary method according to example embodiments may comprise an operation of determining whether said at least one voice data packet indicated with said message as to be uploaded via said satellite link is expected to be said silence descriptor packet based on whether a preceding message indicative of at least one voice data packet to be uploaded via said satellite link is received a predetermined period before said receiving said message.

According to a variation of the procedure shown in Figure 3, exemplary details of the determining operation (determining whether said at least one voice data packet indicated with said message as to be uploaded via said satellite link is expected to be said silence descriptor packet) are given, which are inherently independent from each other as such. Such exemplary determining operation according to example embodiments may comprise an operation of deciding that said at least one voice data packet indicated with said message as to be uploaded via said satellite link is expected to be said silence descriptor packet, if said preceding message indicative of at least one voice data packet to be uploaded via said satellite link is received said predetermined period before said receiving said message.

According to a variation of the procedure shown in Figure 3, exemplary details of the determining operation (determining whether said at least one voice data packet indicated with said message as to be uploaded via said satellite link is expected to be said silence descriptor packet) are given, which are inherently independent from each other as such. Such exemplary determining operation according to example embodiments may comprise an operation of deciding that said at least one voice data packet indicated with said message as to be uploaded via said satellite link is not expected to be a silence descriptor packet, if said preceding message indicative of at least one voice data packet to be uploaded via said satellite link is not received said predetermined period before said receiving said message.

According to a variation of the procedure shown in Figure 3, exemplary additional operations are given, which are inherently independent from each other as such. According to such variation, an exemplary method according to example embodiments may comprise an operation of receiving said scheduled first number of voice data packets, and an operation of evaluating whether a first packet of said first number of voice data packets is a silence descriptor packet.

According to a variation of the procedure shown in Figure 3, exemplary details of the evaluating operation are given, which are inherently independent from each other as such. Such exemplary evaluating operation according to example embodiments may comprise an operation of comparing a size of said first packet of said first number of voice data packets with a predetermined size, an operation of deciding that said first packet of said first number of voice data packets is said silence descriptor packet, if said size of said first packet of said first number of voice data packets is smaller than said predetermined size, and an operation of deciding that said first packet of said first number of voice data packets is not said silence descriptor packet, if said size of said first packet of said first number of voice data packets is equal to or larger than said predetermined size.

According to a variation of the procedure shown in Figure 3, exemplary additional operations are given, which are inherently independent from each other as such. According to such variation, an exemplary method according to example embodiments may comprise an operation of setting a talk state of said communication endpoint to active, if said first packet of said first number of voice data packets is not said silence descriptor packet.

According to a variation of the procedure shown in Figure 3, exemplary additional operations are given, which are inherently independent from each other as such. According to such variation, an exemplary method according to example embodiments may comprise an operation of setting said talk state of said communication endpoint to inactive, if no voice activity is received from said communication endpoint for a predetermined period.

According to a variation of the procedure shown in Figure 3, exemplary additional operations are given, which are inherently independent from each other as such. According to such variation, an exemplary method according to example embodiments may comprise an operation of setting said talk state of said communication endpoint to inactive, if a silence descriptor packet is received from said communication endpoint.

Example embodiments outlined and specified above are explained below in more specific terms.

In LTE VoLTE, voice packets are generated independently from each other in the UL and DL. During a talk period, voice packets are generated every 20ms, with the voice packet size being dependent on the codec being used. A typical VoLTE rate is 13.2 or 12.65 Kbps, with a packet size of 328 bits, which allows for the reporting of power headroom reports (PHR) and BSRs.

During a silent period, silence indicators (SID frames) are generated every 160ms. SID frames are the same size for all codec rates. The goal of the UL and DL schedulers is to allocate resources for the voice and SID packets in a timely manner, with the proper RF characteristics to ensure reliable delivery, and with efficient use of over-the-air resources.

The following goals must be met to achieve high voice quality
- Packet delay less than 100ms (under less than best case conditions),
- Packet loss near 0%, and
- Minimal audio gaps.

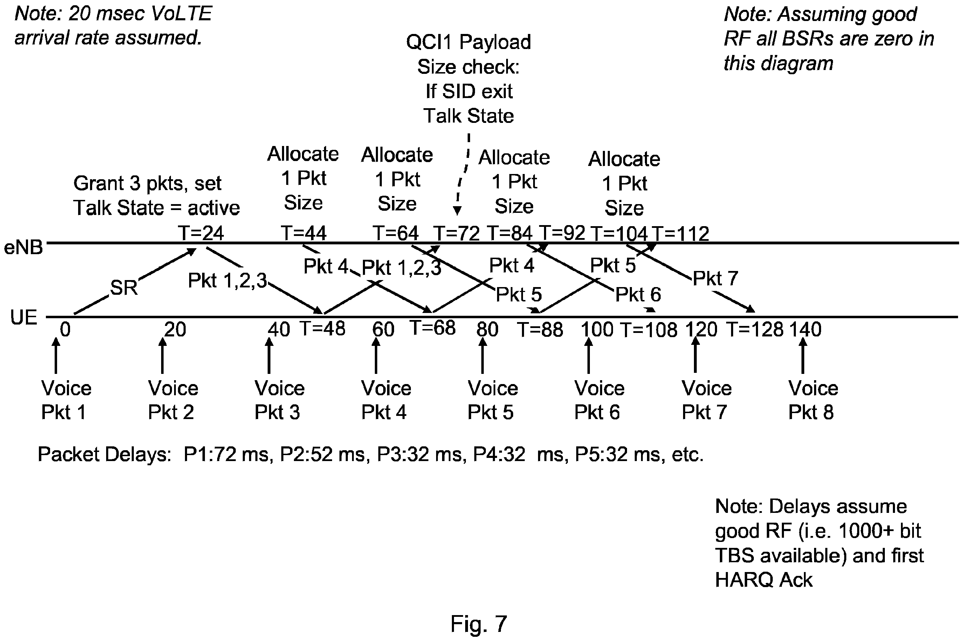

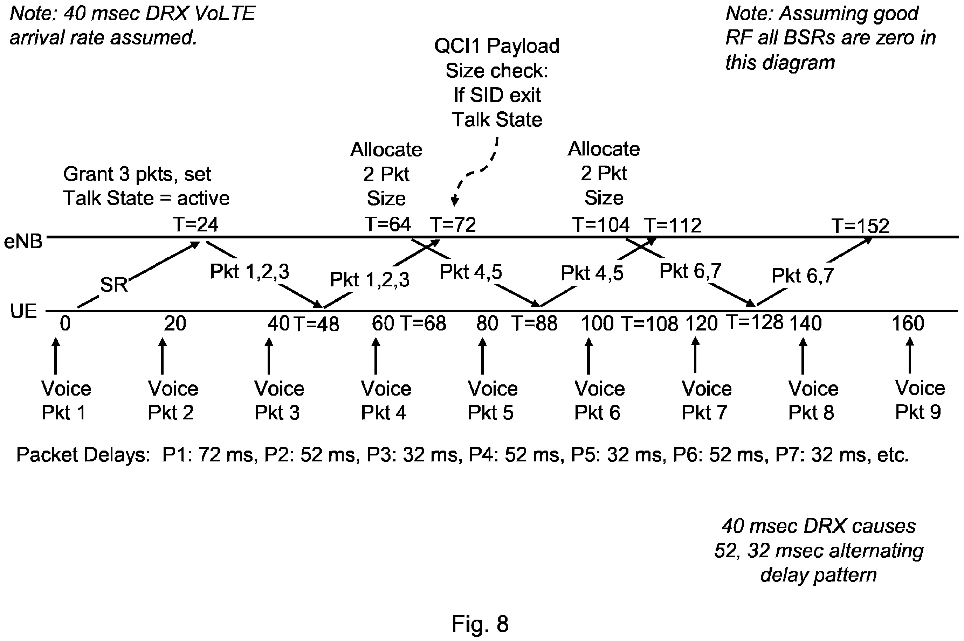

Figure 7 shows a schematic diagram of signaling sequences according to example embodiments. Figure 8 shows a schematic diagram of signaling sequences according to example embodiments. In particular, Figures 7 and 8 illustrate the start of a talk spurt. Here, in Figure 7, a 20 msec VoLTE arrival rate is assumed, while in Figure 8, a 40 msec DRX VoLTE arrival rate is assumed.

When a voice bearer is present, it is assumed that when an SR is received, a voice packet is being received/accumulated. There is an exception when back-to-back silence (SID) packets are seen spaced roughly 160 msec apart, but the normal case when back-to-back SID frames are not seen is that a voice packet is available at the UE and needs to be sent up to the eNB.

The normal round-trip delay in a terrestrial system is 8 msec for LTE. This is the time from the eNB sending a physical downlink control channel (PDCCH) grant for the UL and the UL packet being decoded and received at the eNB. However, the satellite system described here adds 40 msec to the round-trip time so that the total time from a PDCCH grant being sent to the UE to the PUSCH data being received on the uplink for the first HARQ attempt is 48 msec.

From the timing seen in Figures 7 and 8 for both the 20 msec and 40 msec DRX case, there can be up to three voice packets waiting at the UE for transmission to the eNB by the time the first PDCCH grant is received at the UE.

Thus, in order to allow the eNB to catch up with the expected outstanding voice packets at the UE, according to example embodiments, the eNB scheduler proactively adds three voice packets worth of voice data to the estimated eNB uplink buffer. Under good RF conditions, this will allow the eNB to grant a single UL request to the UE that allows the UE to drain its voice data buffer, thus minimizing the UL delay.

In the 20 msec voice packet arrival case illustrated in Figure 7, according to example embodiments, every 20 msec, proactive grants are sent to the UE in anticipation that there is voice data that needs to be retrieved from the UE. That is, 1 voice packet size is allocated every 20 msec.

Similarly, in the 40 msec voice packet arrival case illustrated in Figure 8, according to example embodiments, two voice packet sizes are allocated with a proactive grant to the UL buffer to drain the UE buffer of voice data.

In both cases, according to example embodiments, the allocations from the eNB are set such that the grants arrive at the UE shortly after the voice packet (or packets) (for which the respective proactive grants are provided) are available at the UE.

The timing diagrams of Figures 7 and 8 show the grants arriving about 8 msec later than the availability of the voice packets due to a periodic 20 or 40 msec timer that starts based on the reception of the SR from the UE. However, according to example embodiments, the start of this 20 or 40 msec period train of proactive grants can be adjusted to be closer than the 8 msec difference shown in the timing diagrams of Figures 7 and 8, thus further reducing the best case voice packet delay times.

It is emphasized that the use of periodic proactive grants is timed to largely negate the delay caused by the satellite such that the UE gets a grant to send up the voice packets just after the voice packets are available for UL transmission.

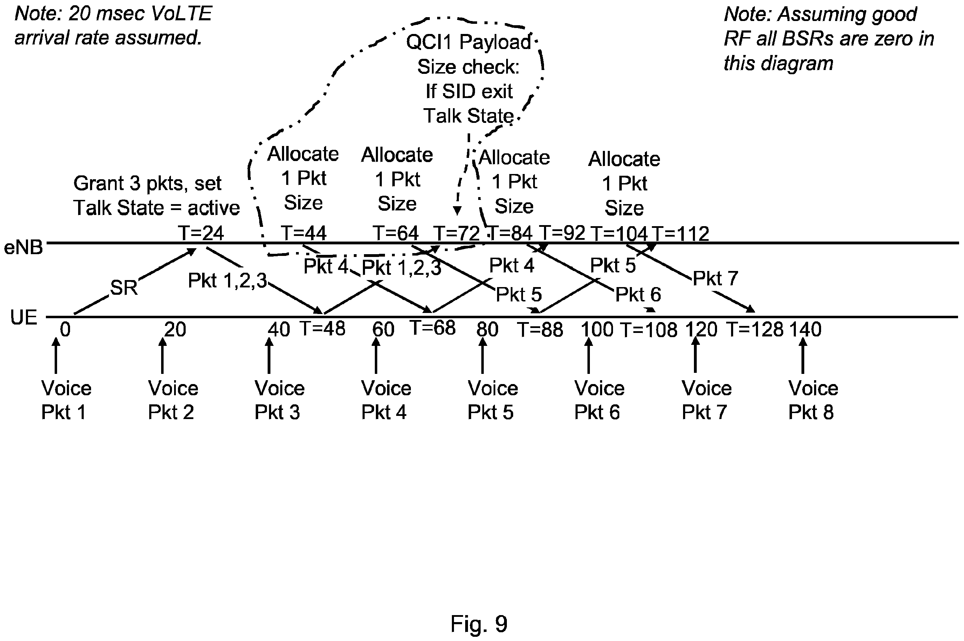

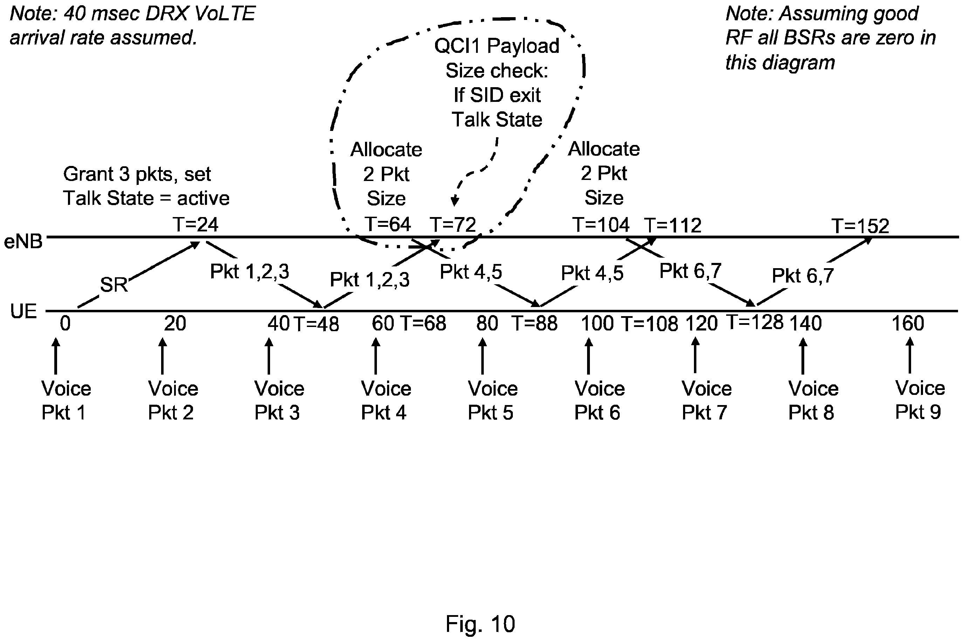

Figure 9 shows a schematic diagram of signaling sequences according to example embodiments. Figure 10 shows a schematic diagram of signaling sequences according to example embodiments. In particular, Figures 9 and 10 illustrate that, according to example embodiments, an SID check is performed on the first packet from the SR to see if this was really a voice packet or if it was only an SID packet.

According to example embodiments, an SID packet is determined by looking at the size of the voice data received. If this was an SID packet, it will be much smaller than a normal voice packet.

Although it is not always the case, a high likelihood case is that when one SID is detected, if another SR is not seen until roughly 160 msec, this second SR is also highly likely an SID but not the start of another talk spurt.

If a SID is detected, Figures 9 and 10 show that five voice packet sizes have been queued. If five voice packet grants were sent for every SID, this would be wasteful of bandwidth.

Therefore, according to example embodiments, arrival of SIDs is predicted, and for a predicted SID fewer resources than for a voice packet are granted.

To accomplish this, according to example embodiments, a timer is started when an SID is detected. To be more precise, according to example embodiments, when an SID is detected, a timer set to 160 msec is started, having as its start time the receipt of the SR corresponding to (i.e., preceding) the SID, i.e., having as its start time the receipt of the SR caused by the packet found to be the SID. Alternatively, according to example embodiments, as it takes 48 msec after receipt of the SR for the SID to be received, the timer started after the SID detection is set to 112 msec (i.e., 160 msec - 48 msec) in order to expire 160 msec after receipt of the SR caused by the packet found to be the SID. If another SR is received close to 160 msec later, then it is assumed to be a SID, and then only one grant is given (big enough for a SID or voice packet).

According to example embodiments, assumption of an SID is made based on a time window. The time window may be about 10 msec. In this case, the time is set (e.g. in line with the above explained two alternatives) so as to expire 155 msec after receipt of the SR caused by the packet found to be the SID. If another SR is received within the time window after expiry of the timer, then it is assumed to be a SID. According to example embodiments, the timer and time window for assessing whether a further SR arrives close to 160 msec later is not limited to 155 msec and 10 msec, respectively.

The remaining four grants are not proactively given until the SID check illustrated in Figures 9 and 10 is done and there is determined to be voice data present.

If there is voice data present, according to example embodiments, voice packets are immediately queued to allow the UE and the space vehicle (here: satellite) (SV) to catch up with the potentially four voice packets outstanding.

Otherwise, in the more likely case of the SID, there is minimal wasted bandwidth. If an SR does not arrive close to 160 msec after a SID, it is assumed to be for a voice packet, and the full number (three voice packets) worth of grants are sent immediately, and two more before the SID check.

If the 160 msec timer does not predict the SID as accurately as desired, according to example embodiments, the algorithm can be tuned for the amount of resources allocated in response to the SR, and subsequently allocated prior to the SID check.

For example when an SID is not expected, in both the 20 msec and 40 msec cases above, there are two packet sizes granted after the SR and prior to the SID check.

According to example embodiments, the algorithm may be changed to hold these grants (but not the initial three packet grants) until after the SID check is done. This will delay these two voice packets, but after this, the eNB and UE will be caught up.

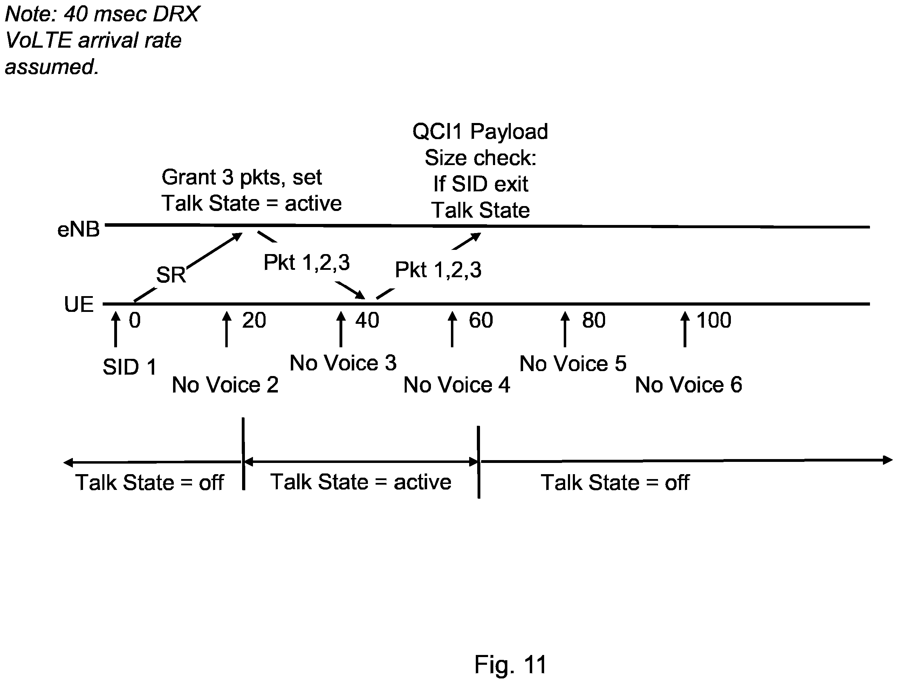

Figure 11 shows a schematic diagram of signaling sequences according to example embodiments, and in particular illustrates the above tuning option for the algorithm where the two packet sizes granted after the SR are held back until the SID check. This example of tuning would be well suited if the accuracy of the SID prediction (by the 160 msec timer) was only moderate (20%-30% "false alarms").

To measure how accurate the 160 msec timer predicts the SID, according to example embodiments, a peg count is provided, indicating the number of times a voice packet was expected but a SID was received, and a peg count is provided, indicating total SIDs received. According to these example embodiments, accuracy is measured by comparing the two peg counts. A lower ratio indicates more prediction accuracy, and a higher ratio indicates less accuracy (and more wasted grants).

Based on this measurement data, according to example embodiments, the algorithm may be tuned by varying the number of initial grants at the SR and subsequent grants before the SID check. The algorithm can either be biased towards reducing voice delay, or towards not wasting grant resources. According to example embodiments, the algorithm can be tuned based on the measurement data over a period of days, or alternatively the algorithm tuning could be made adaptive such that the parameters are tuned for an individual call, based on per-call SID prediction accuracy measurements from the beginning of that VoLTE call. This would introduce more complexity.

In other words, according to example embodiments, the algorithm is adaptively tuning based on a prediction accuracy of SIDs. This may include tuning the initial grant (after SR received) and may include tuning the periodic grants based on a prediction accuracy of SIDs. As an example of adaptive tuning of the algorithm, when the SID prediction average exceeds a threshold that indicates accuracy is less (more wasted grants),the initial grant (after SR received) is reduced from 3 to 2 packets.

It is possible that different codecs and/or UE implementations might have varying SID timing. If so, according to example embodiments, an adaptive approach as explained above might be warranted to reduce wasted grants.

If field experience indicates that there are a number of different UE implementations with varying SID timing, according to example embodiments, an AI application may be warranted to tune the algorithm, and/or to predict the SID arrival more accurate that the 160 msec timer.

Other than the back-to-back SID case above, the arrival of an SR may be assumed to be the start of a new talk spurt. According to example embodiments, at this time the talk state is set to "active" ("Talk State = active"), and periodic proactive grants are continually issued until no voice activity is detected for a period of time (such as 100 msec) at which time the talk state is set to "inactive" ("Talk State = inactive"), and the periodic proactive grants are cancelled.

In Figure 11 the case is illustrated where no SID was seen about 160 msec prior to receiving this SR, therefore the timer did not accurately predict the SID arrival. Therefore, this SR was assumed to be due to a voice packet and was assumed to be the start of a talk spurt. However, in the case illustrated in Figure 11, a SID was detected. Hence, in Figure 11, changes of the talk state as the SR was received at the eNB and as the payload check revealed this to be a SID packet are illustrated. According to example embodiments, this case would peg the aforementioned count of "voice packet expected but SID received".

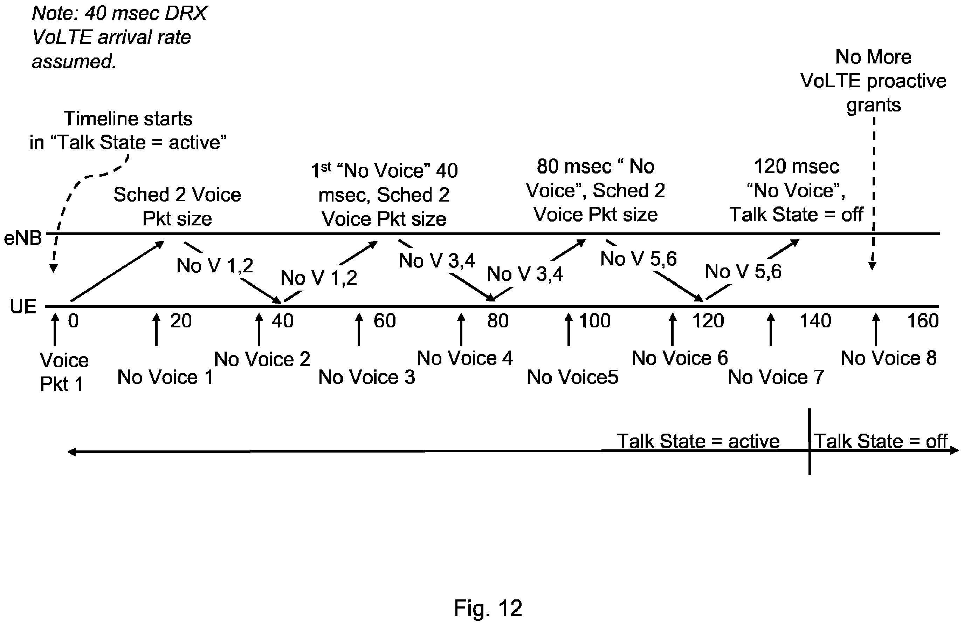

Figure 12 shows a schematic diagram of signaling sequences according to example embodiments, and in particular illustrates a case where no voice packets were received for 100 msec, and, according to example embodiments, the "active" talk state was cancelled, and the proactive periodic grants were removed. According to example embodiments, at the transition to "Talk State = off" (i.e., "Talk State = inactive"), the 160 msec SID timer would be started with a value of 60 msec, anticipating the first SID arrival 160 msec after the last voice packet.

The timing diagrams discussed above assume that the first HARQ transmissions from the UE are successful, that the RF conditions are good enough to carry the outstanding data from the UE to the eNB, and that there is no queuing delay caused by congestion of the air interface. Thus, the actual delays can be longer than those shown in the timing diagrams discussed above.

These "extra" delays arrive on top of a relatively short "best case" delay due to the optimizations according to example embodiments discussed above.

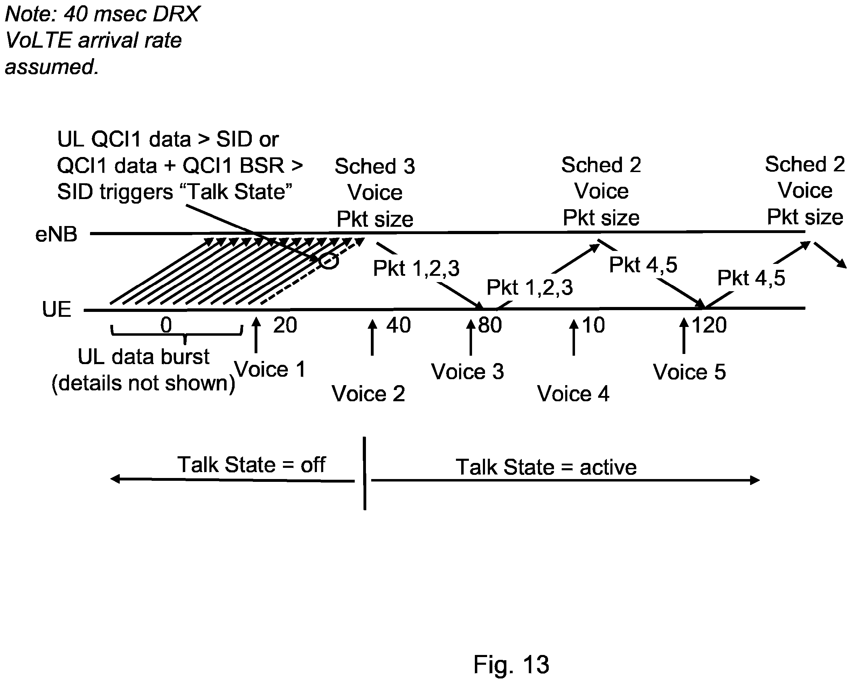

Figure 13 shows a schematic diagram of signaling sequences according to example embodiments, and in particular illustrates the case where an uplink VoLTE packet must be segmented, e.g. due to a lower signal-to-interference-plus-noise ratio (SINR).

Such segmentation results in multiple packets sent on the UL.

According to example embodiments, the SID check takes into account both QCI1 BSR buffer data (QCI: QoS class identifier, quality of service class identifier) and UL QCI1 data received. This way, if the first received segment of a voice packet is very small, this would nevertheless not be mistaken for a SID packet.

There is a potential of concurrent voice and data. Figure 13 also shows the case where an UL data session was active and a BSR was received that showed voice data pending at the UE that was not a SID. This was not a SR, but still kicked off the start of an "active" talk state along with periodic proactive grants.

Returning to Figures 9 and 10, it is noted that in good RF conditions, all the BSRs are 0 when the algorithm is working properly. However, it is possible that a UE could use a grant that was meant for the QCI1 bearer in LCG1 (LCG: logical channel group) for some other packet. According to example embodiments, the BSR buffer data for LCG1 is added to the proactive grant data so that (an) additional grant(s) will be sent in order that the UL data stream would not get behind. Therefore, according to such example embodiments, subsequent BSRs should be 0.

When implementing above-disclosed example embodiments, advantageously, substantial delay reduction can be achieved in the best case scenario.

Unfavorable scenario greatly increases the VoLTE packet delay on top of that for the best case. Extra delays include, for example
- Queuing delays due to radio congestion,
- Additional HARQ retransmission delays, and
- Voice packet segmentation in RF conditions that are not favorable.

Without implementing above-disclosed example embodiments, the best case delay for the satellite scenario, given 40 msec DRX, extends up to 130 msec, compared to roughly 28 to 32 msec in a terrestrial network.

On the other hand, when implementing above-disclosed example embodiments, a 32 msec delay is achieved for the periodic 20 msec VoLTE case, and 32 or 52 msec delay is achieved in the 40 msec DRX case.

According to example embodiments, advantageously, this time can be further reduced up to 8 msec by optimizing the timing of the periodic 20 msec or 40 msec proactive grants compared to the starting SR reception. This results in 24 to 44 msec best case delay compared to 90 to 130 msec best case delay without implementing above-disclosed example embodiments.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network entity or node (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

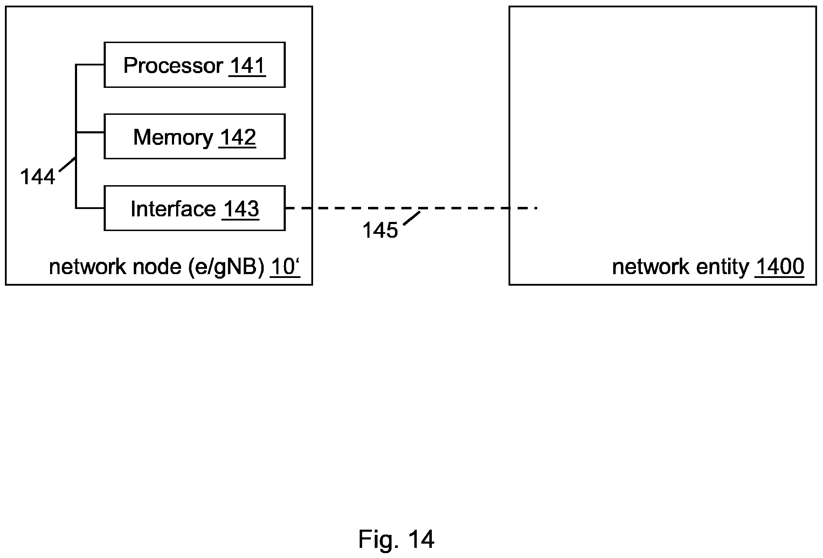

In Figure 14, an alternative illustration of apparatuses according to example embodiments is depicted. As indicated in Figure 14, according to example embodiments, the apparatus (network node or entity) 10' (corresponding to the network node or entity 10) comprises a processor 141, a memory 142 and an interface 143, which are connected by a bus 144 or the like. The apparatus 10 may be connected with another apparatus 1400 (the interface thereof) via link 145.

The processor 141 and/or the interface 143 may also include a modem or the like to facilitate communication over a (hardwire or wireless) link, respectively. The interface 143 may include a suitable transceiver coupled to one or more antennas or communication means for (hardwire or wireless) communications with the linked or connected device(s), respectively. The interface 143 is generally configured to communicate with at least one other apparatus, i.e. the interface thereof.

The memory 142 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the network node or entity 10 comprises at least one processor 141, at least one memory 142 including computer program code, and at least one interface 143 configured for communication with at least another apparatus. The processor (i.e. the at least one processor 141, with the at least one memory 142 and the computer program code) is configured to perform receiving, from a communication endpoint, a message indicative of at least one voice data packet to be uploaded via a satellite link (thus the apparatus comprising corresponding means for receiving), to perform determining a first number of voice data packets based on a second number of voice data packets predicted to accumulate until receipt of a first grant message at said communication endpoint (thus the apparatus comprising corresponding means for determining), and to perform transmitting, towards said communication endpoint, said first grant message, said first grant message being indicative of an upload scheduling grant for said first number of voice data packets (thus the apparatus comprising corresponding means for transmitting).

For further details regarding the operability/functionality of the individual apparatuses, reference is made to the above description in connection with any one of Figures 1 to 13, respectively.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for enhancement of packet based voice call service over satellite link. Such measures exemplarily comprise receiving, from a communication endpoint, a message indicative of at least one voice data packet to be uploaded via a satellite link, determining a first number of voice data packets based on a second number of voice data packets predicted to accumulate until receipt of a first grant message at said communication endpoint, and transmitting, towards said communication endpoint, said first grant message, said first grant message being indicative of an upload scheduling grant for said first number of voice data packets.

Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the inventive idea as disclosed herein.

The above disclosure provides basis for at least the following items:
Item 1. A method comprising
   receiving, from a communication endpoint, a message indicative of at least one voice data packet to be uploaded via a satellite link,
   determining a first number of voice data packets based on a second number of voice data packets predicted to accumulate until receipt of a first grant message at said communication endpoint, and
   transmitting, towards said communication endpoint, said first grant message, said first grant message being indicative of an upload scheduling grant for said first number of voice data packets.
Item 2. The method according to item 1, further comprising predicting said second number of voice data packets.
Item 3. The method according to item 1 or 2, wherein
   said first number of voice data packets is equal to said second number of voice data packets.
Item 4. The method according to any of items 1 to 3, wherein
   said first number of voice data packets is determined based on a prediction accuracy of silence descriptor packets.
Item 5. The method according to any of items 1 to 4, wherein
   said first number of voice data packets is determined based on a weighing of voice delay and resource wasting.
Item 6. The method according to any of items 1 to 5, wherein
   said first number of voice data packets is determined based on whether said at least one voice data packet indicated with said message as to be uploaded via said satellite link is expected to be a silence descriptor packet.
Item 7. The method according to item 6, wherein
   said first number of voice data packets is determined smaller in case said at least one voice data packet indicated with said message as to be uploaded via said satellite link is expected to be said silence descriptor packet than in case said at least one voice data packet indicated with said message as to be uploaded via said satellite link is not expected to be said silence descriptor packet.
Item 8. The method according to any of items 1 to 7, further comprising
   determining a third number of voice data packets based on a fourth number of voice data packets predicted to accumulate between receipt of a grant message preceding a second grant message at said communication endpoint and receipt of said second grant message at said communication endpoint, and
   transmitting, towards said communication endpoint, said second grant message, said second grant message being indicative of an upload scheduling grant for said third number of voice data packets.
Item 9. The method according to item 8, further comprising
   predicting said fourth number of voice data packets.
Item 10. The method according to item 8 or 9, wherein
   said third number of voice data packets is equal to said fourth number of voice data packets.
Item 11. The method according to any of items 8 to 10, wherein
   said third number of voice data packets is determined based on a prediction accuracy of silence descriptor packets.
Item 12. The method according to any of items 8 to 11, wherein
   said third number of voice data packets is determined based on a weighing of voice delay and resource wasting.
Item 13. The method according to any of items 8 to 12, wherein
   said third number of voice data packets is determined based on whether said at least one voice data packet indicated with said message as to be uploaded via said satellite link is expected to be a silence descriptor packet.
Item 14. The method according to item 13, wherein
   said third number of voice data packets is determined smaller in case said at least one voice data packet indicated with said message as to be uploaded via said satellite link is expected to be said silence descriptor packet than in case said at least one voice data packet indicated with said message as to be uploaded via said satellite link is not expected to be said silence descriptor packet.
Item 15. The method according to any of items 8 to 14, further comprising
   measuring a first timing of said receiving said message, and
   determining a second timing of said transmitting said second grant message based on said first timing.
Item 16. The method according to item 15, further comprising
   determining a period between transmitting said grant message preceding said second grant message and said transmitting said second grant message, wherein
   said second timing is determined based on said period.
Item 17. The method according to item 16, wherein
   said period is determined based on a discontinuous reception configuration of said communication endpoint.
Item 18. The method according to item 16 or 17, wherein
   said period is determined such that a time interval between accumulating a last of said fourth number of voice data packets predicted to accumulate between receipt of said grant message preceding said second grant message at said communication endpoint and receipt of said second grant message at said communication endpoint and receipt of said second grant message at said communication endpoint is minimized.
Item 19. The method according to any of items 6, 7, 13 or 14, further comprising
   determining whether said at least one voice data packet indicated with said message as to be uploaded via said satellite link is expected to be said silence descriptor packet based on whether a preceding message indicative of at least one voice data packet to be uploaded via said satellite link is received a predetermined period before said receiving said message.
Item 20. The method according to item 19, wherein
   in relation to said determining whether said at least one voice data packet indicated with said message as to be uploaded via said satellite link is expected to be said silence descriptor packet, the method further comprises
   deciding that said at least one voice data packet indicated with said message as to be uploaded via said satellite link is expected to be said silence descriptor packet, if said preceding message indicative of at least one voice data packet to be uploaded via said satellite link is received said predetermined period before said receiving said message.
Item 21. The method according to item 19 or 20, wherein
   in relation to said determining whether said at least one voice data packet indicated with said message as to be uploaded via said satellite link is expected to be said silence descriptor packet, the method further comprises
   deciding that said at least one voice data packet indicated with said message as to be uploaded via said satellite link is not expected to be a silence descriptor packet, if said preceding message indicative of at least one voice data packet to be uploaded via said satellite link is not received said predetermined period before said receiving said message.
Item 22. The method according to any of items 1 to 21, further comprising
   receiving said scheduled first number of voice data packets, and
   evaluating whether a first packet of said first number of voice data packets is a silence descriptor packet.
Item 23. The method according to item 22, wherein
   in relation to said evaluating, the method further comprises
   comparing a size of said first packet of said first number of voice data packets with a predetermined size,
   deciding that said first packet of said first number of voice data packets is said silence descriptor packet, if said size of said first packet of said first number of voice data packets is smaller than said predetermined size, and
   deciding that said first packet of said first number of voice data packets is not said silence descriptor packet, if said size of said first packet of said first number of voice data packets is equal to or larger than said predetermined size.
Item 24. The method according to item 23, further comprising
   setting a talk state of said communication endpoint to active, if said first packet of said first number of voice data packets is not said silence descriptor packet.
Item 25. The method according to item 24, further comprising
   setting said talk state of said communication endpoint to inactive, if no voice activity is received from said communication endpoint for a predetermined period.
Item 26. The method according to item 24 or 25, further comprising
   setting said talk state of said communication endpoint to inactive, if a silence descriptor packet is received from said communication endpoint.
Item 27. An apparatus comprising
   receiving circuitry configured to receive, from a communication endpoint, a message indicative of at least one voice data packet to be uploaded via a satellite link,
   determining circuitry configured to determine a first number of voice data packets based on a second number of voice data packets predicted to accumulate until receipt of a first grant message at said communication endpoint, and
   transmitting circuitry configured to transmit, towards said communication endpoint, said first grant message, said first grant message being indicative of an upload scheduling grant for said first number of voice data packets.
Item 28. The apparatus according to item 27, further comprising
   predicting circuitry configured to predict said second number of voice data packets.
Item 29. The apparatus according to item 27 or 28, wherein
   said first number of voice data packets is equal to said second number of voice data packets.
Item 30. The apparatus according to any of items 27 to 29, wherein
   said first number of voice data packets is determined based on a prediction accuracy of silence descriptor packets.
Item 31. The apparatus according to any of items 27 to 30, wherein
   said first number of voice data packets is determined based on a weighing of voice delay and resource wasting.
Item 32. The apparatus according to any of items 27 to 31, wherein
   said first number of voice data packets is determined based on whether said at least one voice data packet indicated with said message as to be uploaded via said satellite link is expected to be a silence descriptor packet.
Item 33. The apparatus according to item 32, wherein
   said first number of voice data packets is determined smaller in case said at least one voice data packet indicated with said message as to be uploaded via said satellite link is expected to be said silence descriptor packet than in case said at least one voice data packet indicated with said message as to be uploaded via said satellite link is not expected to be said silence descriptor packet.
Item 34. The apparatus according to any of items 27 to 33, further comprising
   determining circuitry configured to determine a third number of voice data packets based on a fourth number of voice data packets predicted to accumulate between receipt of a grant message preceding a second grant message at said communication endpoint and receipt of said second grant message at said communication endpoint, and
   transmitting circuitry configured to transmit, towards said communication endpoint, said second grant message, said second grant message being indicative of an upload scheduling grant for said third number of voice data packets.
Item 35. The apparatus according to item 34, further comprising
   predicting circuitry configured to predict said fourth number of voice data packets.
Item 36. The apparatus according to item 34 or 35, wherein
   said third number of voice data packets is equal to said fourth number of voice data packets.
Item 37. The apparatus according to any of items 34 to 36, wherein
   said third number of voice data packets is determined based on a prediction accuracy of silence descriptor packets.
Item 38. The apparatus according to any of items 34 to 37, wherein
   said third number of voice data packets is determined based on a weighing of voice delay and resource wasting.
Item 39. The apparatus according to any of items 34 to 38, wherein
   said third number of voice data packets is determined based on whether said at least one voice data packet indicated with said message as to be uploaded via said satellite link is expected to be a silence descriptor packet.
Item 40. The apparatus according to item 39, wherein
   said third number of voice data packets is determined smaller in case said at least one voice data packet indicated with said message as to be uploaded via said satellite link is expected to be said silence descriptor packet than in case said at least one voice data packet indicated with said message as to be uploaded via said satellite link is not expected to be said silence descriptor packet.
Item 41. The apparatus according to any of items 34 to 40, further comprising
   measuring circuitry configured to measure a first timing of said receiving said message, and
   determining circuitry configured to determine a second timing of said transmitting said second grant message based on said first timing.
Item 42. The apparatus according to item 41, further comprising
   determining circuitry configured to determine a period between transmitting said grant message preceding said second grant message and said transmitting said second grant message, wherein
   said second timing is determined based on said period.
Item 43. The apparatus according to item 42, wherein
   said period is determined based on a discontinuous reception configuration of said communication endpoint.
Item 44. The apparatus according to item 42 or 43, wherein
   said period is determined such that a time interval between accumulating a last of said fourth number of voice data packets predicted to accumulate between receipt of said grant message preceding said second grant message at said communication endpoint and receipt of said second grant message at said communication endpoint and receipt of said second grant message at said communication endpoint is minimized.
Item 45. The apparatus according to any of items 32, 33, 39 or 40, further comprising
   determining circuitry configured to determine whether said at least one voice data packet indicated with said message as to be uploaded via said satellite link is expected to be said silence descriptor packet based on whether a preceding message indicative of at least one voice data packet to be uploaded via said satellite link is received a predetermined period before said receiving said message.
Item 46. The apparatus according to item 45, further comprising
   deciding circuitry configured to decide that said at least one voice data packet indicated with said message as to be uploaded via said satellite link is expected to be said silence descriptor packet, if said preceding message indicative of at least one voice data packet to be uploaded via said satellite link is received said predetermined period before said receiving said message.
Item 47. The apparatus according to item 45 or 46, further comprising
   deciding circuitry configured to decide that said at least one voice data packet indicated with said message as to be uploaded via said satellite link is not expected to be a silence descriptor packet, if said preceding message indicative of at least one voice data packet to be uploaded via said satellite link is not received said predetermined period before said receiving said message.
Item 48. The apparatus according to any of items 27 to 47, further comprising
   receiving circuitry configured to receive said scheduled first number of voice data packets, and
   evaluating circuitry configured to evaluate whether a first packet of said first number of voice data packets is a silence descriptor packet.
Item 49. The apparatus according to item 48, further comprising
   comparing circuitry configured to compare a size of said first packet of said first number of voice data packets with a predetermined size,
   deciding circuitry configured to
      decide that said first packet of said first number of voice data packets is said silence descriptor packet, if said size of said first packet of said first number of voice data packets is smaller than said predetermined size, and to
      decide that said first packet of said first number of voice data packets is not said silence descriptor packet, if said size of said first packet of said first number of voice data packets is equal to or larger than said predetermined size.
Item 50. The apparatus according to item 49, further comprising
   setting circuitry configured to set a talk state of said communication endpoint to active, if said first packet of said first number of voice data packets is not said silence descriptor packet.
Item 51. The apparatus according to item 50, further comprising
   setting circuitry configured to set said talk state of said communication endpoint to inactive, if no voice activity is received from said communication endpoint for a predetermined period.
Item 52. The apparatus according to item 50 or 51, further comprising
   setting circuitry configured to set said talk state of said communication endpoint to inactive, if a silence descriptor packet is received from said communication endpoint.
Item 53. An apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      receiving, from a communication endpoint, a message indicative of at least one voice data packet to be uploaded via a satellite link,
      determining a first number of voice data packets based on a second number of voice data packets predicted to accumulate until receipt of a first grant message at said communication endpoint, and
      transmitting, towards said communication endpoint, said first grant message, said first grant message being indicative of an upload scheduling grant for said first number of voice data packets.
Item 54. The apparatus according to item 53, wherein
   the at least one processor, with the at least one memory and the computer program code, being configured to cause the apparatus to perform:
   predicting said second number of voice data packets.
Item 55. The apparatus according to item 53 or 54, wherein
   said first number of voice data packets is equal to said second number of voice data packets.
Item 56. The apparatus according to any of items 53 to 55, wherein
   said first number of voice data packets is determined based on a prediction accuracy of silence descriptor packets.
Item 57. The apparatus according to any of items 53 to 56, wherein
   said first number of voice data packets is determined based on a weighing of voice delay and resource wasting.
Item 58. The apparatus according to any of items 53 to 57, wherein
   said first number of voice data packets is determined based on whether said at least one voice data packet indicated with said message as to be uploaded via said satellite link is expected to be a silence descriptor packet.
Item 59. The apparatus according to item 58, wherein
   said first number of voice data packets is determined smaller in case said at least one voice data packet indicated with said message as to be uploaded via said satellite link is expected to be said silence descriptor packet than in case said at least one voice data packet indicated with said message as to be uploaded via said satellite link is not expected to be said silence descriptor packet.
Item 60. The apparatus according to any of items 53 to 59, wherein
   the at least one processor, with the at least one memory and the computer program code, being configured to cause the apparatus to perform:
   determining a third number of voice data packets based on a fourth number of voice data packets predicted to accumulate between receipt of a grant message preceding a second grant message at said communication endpoint and receipt of said second grant message at said communication endpoint, and
   transmitting, towards said communication endpoint, said second grant message, said second grant message being indicative of an upload scheduling grant for said third number of voice data packets.
Item 61. The apparatus according to item 60, wherein
   the at least one processor, with the at least one memory and the computer program code, being configured to cause the apparatus to perform:
   predicting said fourth number of voice data packets.
Item 62. The apparatus according to item 60 or 61, wherein
   said third number of voice data packets is equal to said fourth number of voice data packets.
Item 63. The apparatus according to any of items 60 to 62, wherein
   said third number of voice data packets is determined based on a prediction accuracy of silence descriptor packets.
Item 64. The apparatus according to any of items 60 to 63, wherein
   said third number of voice data packets is determined based on a weighing of voice delay and resource wasting.
Item 65. The apparatus according to any of items 60 to 64, wherein
   said third number of voice data packets is determined based on whether said at least one voice data packet indicated with said message as to be uploaded via said satellite link is expected to be a silence descriptor packet.
Item 66. The apparatus according to item 65, wherein
   said third number of voice data packets is determined smaller in case said at least one voice data packet indicated with said message as to be uploaded via said satellite link is expected to be said silence descriptor packet than in case said at least one voice data packet indicated with said message as to be uploaded via said satellite link is not expected to be said silence descriptor packet.
Item 67. The apparatus according to any of items 60 to 66, wherein
   the at least one processor, with the at least one memory and the computer program code, being configured to cause the apparatus to perform:
   measuring a first timing of said receiving said message, and
   determining a second timing of said transmitting said second grant message based on said first timing.
Item 68. The apparatus according to item 67, wherein
   the at least one processor, with the at least one memory and the computer program code, being configured to cause the apparatus to perform:
   determining a period between transmitting said grant message preceding said second grant message and said transmitting said second grant message, wherein
   said second timing is determined based on said period.
Item 69. The apparatus according to item 68, wherein
   said period is determined based on a discontinuous reception configuration of said communication endpoint.
Item 70. The apparatus according to item 68 or 69, wherein
   said period is determined such that a time interval between accumulating a last of said fourth number of voice data packets predicted to accumulate between receipt of said grant message preceding said second grant message at said communication endpoint and receipt of said second grant message at said communication endpoint and receipt of said second grant message at said communication endpoint is minimized.
Item 71. The apparatus according to any of items 58, 59, 65 or 66, wherein
   the at least one processor, with the at least one memory and the computer program code, being configured to cause the apparatus to perform:
   determining whether said at least one voice data packet indicated with said message as to be uploaded via said satellite link is expected to be said silence descriptor packet based on whether a preceding message indicative of at least one voice data packet to be uploaded via said satellite link is received a predetermined period before said receiving said message.
Item 72. The apparatus according to item 71, wherein
   in relation to said determining whether said at least one voice data packet indicated with said message as to be uploaded via said satellite link is expected to be said silence descriptor packet, the at least one processor, with the at least one memory and the computer program code, being configured to cause the apparatus to perform:
   deciding that said at least one voice data packet indicated with said message as to be uploaded via said satellite link is expected to be said silence descriptor packet, if said preceding message indicative of at least one voice data packet to be uploaded via said satellite link is received said predetermined period before said receiving said message.
Item 73. The apparatus according to item 71 or 72, wherein
   in relation to said determining whether said at least one voice data packet indicated with said message as to be uploaded via said satellite link is expected to be said silence descriptor packet, the at least one processor, with the at least one memory and the computer program code, being configured to cause the apparatus to perform:
   deciding that said at least one voice data packet indicated with said message as to be uploaded via said satellite link is not expected to be a silence descriptor packet, if said preceding message indicative of at least one voice data packet to be uploaded via said satellite link is not received said predetermined period before said receiving said message.
Item 74. The apparatus according to any of items 53 to 73, wherein
   the at least one processor, with the at least one memory and the computer program code, being configured to cause the apparatus to perform:
   receiving said scheduled first number of voice data packets, and
   evaluating whether a first packet of said first number of voice data packets is a silence descriptor packet.
Item 75. The apparatus according to item 74, wherein
   in relation to said evaluating, the at least one processor, with the at least one memory and the computer program code, being configured to cause the apparatus to perform:
   comparing a size of said first packet of said first number of voice data packets with a predetermined size,
   deciding that said first packet of said first number of voice data packets is said silence descriptor packet, if said size of said first packet of said first number of voice data packets is smaller than said predetermined size, and
   deciding that said first packet of said first number of voice data packets is not said silence descriptor packet, if said size of said first packet of said first number of voice data packets is equal to or larger than said predetermined size.
Item 76. The apparatus according to item 75, wherein
   the at least one processor, with the at least one memory and the computer program code, being configured to cause the apparatus to perform:
   setting a talk state of said communication endpoint to active, if said first packet of said first number of voice data packets is not said silence descriptor packet.
Item 77. The apparatus according to item 76, wherein
   the at least one processor, with the at least one memory and the computer program code, being configured to cause the apparatus to perform:
   setting said talk state of said communication endpoint to inactive, if no voice activity is received from said communication endpoint for a predetermined period.
Item 78. The apparatus according to item 76 or 77, wherein
   the at least one processor, with the at least one memory and the computer program code, being configured to cause the apparatus to perform:
   setting said talk state of said communication endpoint to inactive, if a silence descriptor packet is received from said communication endpoint.
Item 79. A computer program product comprising computer-executable computer program code which, when the program is run on a computer, is configured to cause the computer to carry out the method according to any one of items 1 to 26.
Item 80. The computer program product according to item 79, wherein the computer program product comprises a computer-readable medium on which the computer-executable computer program code is stored, and/or wherein the program is directly loadable into an internal memory of the computer or a processor thereof.

### List of acronyms and abbreviations

- 3GPP: Third Generation Partnership Project
- 5G: 5th Generation
- Ack/Nack: Acknowledgment/Non-Acknowledgement
- BLER: block error rate
- BSR: buffer status report
- DL: downlink
- DRX: discontinuous reception
- eNB: evolved NodeB, eNodeB
- FDD: frequency division duplex
- HARQ: hybrid automatic repeat request
- LCG: logical channel group
- LTE: Long Term Evolution
- PDCCH: physical downlink control channel
- PDSCH: physical downlink shared channel
- PHR: power headroom report
- PUSCH: physical uplink shared channel
- QCI: quality of service class identifier
- rBLER: residual block error rate
- RF: radio frequency (reference to the wireless radio link and its condition)
- SID: silence descriptor
- SINR: signal-to-interference-plus-noise ratio
- SR: scheduling request
- SV: satellite
- UE: user equipment
- UL: uplink
- VoLTE: voice over LTE
- VoNR: voice over New Radio

## Claims

1. A method comprising
receiving (S31), from a communication endpoint, a message (SR) indicative of at least one voice data packet to be uploaded via a satellite link,
determining (S32), in response to said receiving (S31) said message (SR), a first number of voice data packets based on a second number of voice data packets, including said at least one voice data packet, predicted to accumulate until receipt of a first grant message at said communication endpoint, and
transmitting (S33), towards said communication endpoint, said first grant message, said first grant message being indicative of an upload scheduling grant for said first number of voice data packets.

2. The method according to claim 1, wherein
said first number of voice data packets is equal to said second number of voice data packets, and/or
said first number of voice data packets is determined based on a prediction accuracy of silence descriptor packets, and/or
said first number of voice data packets is determined based on a weighing of voice delay and resource wasting.

3. The method according to claim 1 or 2, wherein
said first number of voice data packets is determined based on whether said at least one voice data packet indicated with said message (SR) as to be uploaded via said satellite link is expected to be a silence descriptor packet.

4. The method according to claim 3, wherein
said first number of voice data packets is determined smaller in case said at least one voice data packet indicated with said message (SR) as to be uploaded via said satellite link is expected to be said silence descriptor packet than in case said at least one voice data packet indicated with said message (SR) as to be uploaded via said satellite link is not expected to be said silence descriptor packet.

5. The method according to any of claims 1 to 4, further comprising
determining a third number of voice data packets based on a fourth number of voice data packets predicted to accumulate between receipt of a grant message preceding a second grant message at said communication endpoint and receipt of said second grant message at said communication endpoint, and
transmitting, towards said communication endpoint, said second grant message, said second grant message being indicative of an upload scheduling grant for said third number of voice data packets.

6. The method according to claim 5, wherein
said third number of voice data packets is equal to said fourth number of voice data packets, and/or
said third number of voice data packets is determined based on a prediction accuracy of silence descriptor packets, and/or
said third number of voice data packets is determined based on a weighing of voice delay and resource wasting.

7. The method according to claim 5 or 6, wherein
said third number of voice data packets is determined based on whether said at least one voice data packet indicated with said message (SR) as to be uploaded via said satellite link is expected to be a silence descriptor packet.

8. The method according to claim 7, wherein
said third number of voice data packets is determined smaller in case said at least one voice data packet indicated with said message (SR) as to be uploaded via said satellite link is expected to be said silence descriptor packet than in case said at least one voice data packet indicated with said message (SR) as to be uploaded via said satellite link is not expected to be said silence descriptor packet.

9. The method according to any of claims 5 to 8, further comprising
measuring a first timing of said receiving said message (SR), and
determining a second timing of said transmitting said second grant message based on said first timing.

10. The method according to claim 9, further comprising
determining a period between transmitting said grant message preceding said second grant message and said transmitting said second grant message, wherein
said second timing is determined based on said period, and optionally
said period is determined based on a discontinuous reception configuration of said communication endpoint.

11. The method according to claim 10, wherein
said period is determined such that a time interval between accumulating a last of said fourth number of voice data packets predicted to accumulate between receipt of said grant message preceding said second grant message at said communication endpoint and receipt of said second grant message at said communication endpoint and receipt of said second grant message at said communication endpoint is minimized.

12. The method according to any of claims 3, 4, 7 or 8, further comprising
determining whether said at least one voice data packet indicated with said message (SR) as to be uploaded via said satellite link is expected to be said silence descriptor packet based on whether a preceding message indicative of at least one voice data packet to be uploaded via said satellite link is received a predetermined period before said receiving said message (SR).

13. The method according to claim 12, wherein
in relation to said determining whether said at least one voice data packet indicated with said message (SR) as to be uploaded via said satellite link is expected to be said silence descriptor packet, the method further comprises
deciding that said at least one voice data packet indicated with said message (SR) as to be uploaded via said satellite link is expected to be said silence descriptor packet, if said preceding message indicative of at least one voice data packet to be uploaded via said satellite link is received said predetermined period before said receiving said message (SR).

14. An apparatus (10) comprising
receiving circuitry (11) configured to receive, from a communication endpoint, a message (SR) indicative of at least one voice data packet to be uploaded via a satellite link,
determining circuitry (12) configured to determine, in response to reception of said message (SR), a first number of voice data packets based on a second number of voice data packets, including said at least one voice data packet, predicted to accumulate until receipt of a first grant message at said communication endpoint, and
transmitting circuitry (13) configured to transmit, towards said communication endpoint, said first grant message, said first grant message being indicative of an upload scheduling grant for said first number of voice data packets.

15. A computer program product comprising computer-executable computer program code which, when the program is run on a computer, is configured to cause the computer to carry out the method according to any one of claims 1 to 13, wherein optionally
the computer program product comprises a computer-readable medium on which the computer-executable computer program code is stored, and/or wherein the program is directly loadable into an internal memory of the computer or a processor thereof.
